(19) Europäisches Patentamt
European Patent Office
Office européen des brevets

(11) **EP 3 038 304 B1**

(12) **EUROPEAN PATENT SPECIFICATION**

(45) Date of publication and mention
of the grant of the patent:
**20.02.2019 Bulletin 2019/08**

(51) Int Cl.:
**H04L 12/751** *(2013.01)*   **H04L 12/721** *(2013.01)*

(21) Application number: **14200080.1**

(22) Date of filing: **23.12.2014**

(54) **Routing message delivery method applicable to network node and network node using the same and communication network using the same**

Routing von Nachrichtenausgabeverfahren für Netzwerkknoten und Netzwerkknoten damit und Kommunikationssystem unter Verwendung davon

Procédé de distribution de message d'acheminement applicable à un noeud de réseau et noeud de réseau l'utilisant et réseau de communication l'utilisant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.06.2016 Bulletin 2016/26**

(73) Proprietor: **Industrial Technology Research Institute**
**Chutung Hsinchu 31040 (TW)**

(72) Inventors:
• **Chang, Hsien-Wen**
**300 Hsinchu City (TW)**
• **Yang, Jen-Shun**
**302 Hsinchu County (TW)**
• **Chiu, Yen-Chang**
**350 Miaoli County (TW)**

(74) Representative: **Becker Kurig Straus**
**Patentanwälte**
**Bavariastrasse 7**
**80336 München (DE)**

(56) References cited:
**US-B1- 8 149 715**

• **JOHNSON RICE UNIVERSITY Y HU UIUC D MALTZ MICROSOFT RESEARCH D: "The Dynamic Source Routing Protocol (DSR) for Mobile Ad Hoc Networks for IPv4; rfc4728.txt", 20070201, 1 February 2007 (2007-02-01), XP015055045, ISSN: 0000-0003**
• **PERKINS NOKIA RESEARCH CENTER E BELDING-ROYER UNIVERSITY OF CALIFORNIA C ET AL: "Ad hoc On-Demand Distance Vector (AODV) Routing; rfc3561.txt", 20030701, 1 July 2003 (2003-07-01), XP015009343, ISSN: 0000-0003**
• **PERKINS C E ET AL: "HIGHLY DYNAMIC DESTINATION-SEQUENCED DISTANCE-VECTOR ROUTING (DSDV)FOR MOBILE COMPUTERS", COMPUTER COMMUNICATION REVIEW, ACM, NEW YORK, NY, US, vol. 24, no. 4, 1 October 1994 (1994-10-01), pages 234-244, XP000477054, ISSN: 0146-4833, DOI: 10.1145/190809.190336**
• **JACQUET P ET AL: "Optimized link state routing protocol for ad hoc networks", MULTI TOPIC CONFERENCE, 2001. IEEE INMIC 2001. TECHNOLOGY FOR THE 21ST CENTURY. PROCEEDINGS. IEEE INTERNATIONAL LAHORE, PAKISTAN 28-30 DEC. 2001, PISCATAWAY, NJ, USA,IEEE, US, 28 December 2001 (2001-12-28), pages 62-68, XP010588485, ISBN: 978-0-7803-7406-5**

- **Shree Murthy ET AL: "An Efficient Routing Protocol for Wireless Networks", , 1 January 1996 (1996-01-01), pages 1-27, XP055074604, Retrieved from the Internet: URL:http://thor.cs.ucsb.edu/~ravenben/pape rs/sensors/wrp.pdf [retrieved on 2013-08-08]**

**Description**

**TECHNICAL FIELD**

The present disclosure generally relates to a routing message delivery method that is applicable to a network node, a network node using the same method, and a communication network using the same method.

**BACKGROUND**

In a proximity-based relay network, there could be one or more network nodes that are interconnected among one another, and any one of the network nodes may function as a relay to forward messages from one location of a network to another location of the network. A network node may connect to another network node through a wireless connection, a coaxial cable, a fiber optical cable, and so forth. In addition, a network node could be an access point which provides Wi-Fi connections to one or more electronic devices. The network node may or may not have internet connect and thus may rely on another network node to access the internet. In that case, the relay node would need to determine how to forward a message from another network node and how to initiate its own message according to a predetermined mechanism.

Thus, in order for a network node to function as a part of the whole, the network node would be required to operate under a predefined mechanism in order for the proximity-based relay network to maintain an operable network topology. For instance, a network node could be required to maintain a routing table so that the network would know who the neighboring network nodes are and what routes could be available if a message is to be forwarded or initiated. However, assuming that each of the network nodes of a proximity-based relay network is able to initiate its own message and to dump the message into the network at any time, a glut of information may cause the proximity-base relay network to overload. Therefore, one of the important goals in a network design may involve effectively managing the topology of the network in order to reduce the burden of the network.

Also, the mechanism of choosing network routes could be crucial. Typically, when a network node could select from different routes to deliver a message, the network node would select the route having the least number of hops. However, this method of selecting route might not be optimal. For example, under the circumstance in which one or more network nodes are outdoors and thus are not plugged into a power source, there could be problems related to the power level. Also the quality of connections as well as distances among network nodes could also be pertinent. Therefore, a robust mechanism could be in place to determine the selection of network routes.

Moreover, a network node could be suddenly offline or another network node could be suddenly activated. Each network node may need to have a way to find out what network nodes within the proximity-based relay network are offline and what network node are newly activated so that each network node would be able to adapt to new circumstances and react whenever the circumstance changes. If changes to the network topology are not known by the network nodes, then the discrepancies of the routing tables among network nodes may result in network errors which may cause data

US 8 149 715 B1 discloses improved mesh networks improving operations thereof in connection with battery powered devices and address concerns associated with latency issues due to power save nodes as well as load balancing. Address route cache timeouts, reduce route discovery overhead, perform proactive route maintenance based on a node's battery, and provide a straightforward battery-aware process based sleep protocol are managed therein.

**SUMMARY OF THE DISCLOSURE**

Accordingly, the disclosure relates to a routing message delivery method that is applicable to a network node, a network node using the same method, and a communication network using the same method. The invention is carried out according to the appended independent claims. Optional features of the invention are carried out according to the dependent claims.

According to one background art example, the proposed routing message delivery method would include at least but not limited to initiating a timer having a first timer value that is a non-zero positive number, forwarding a first routing message via a first path in response to receiving the first routing message before the timer expires, initiating a second routing message via the first path and a second path in response to not receiving the first routing message before the timer expires, constructing a current network topology, evaluating the first path and the second path within the current network topology and maintaining the current network topology.

According to one background art example, the proposed network node would include at least but not limited to a timer, for initiating a timer having a first timer value that is a non-zero positive number, a routing message forwarder, for forwarding a first routing message via a first path in response to receiving the first routing message before the timer expires, a routing message initiating circuit, for initiating a second routing message via the first path and a second path in response to not receiving the first routing message before the timer expires, a routing table generator, for constructing a current network topology and updating the current network topology, and a routing metric evaluating circuit, for evaluating the first path and the second path within the current network topology to deliver a data packet via the first path or the second path .

According to one background art example, the proposed communication network would include at least but not limited to a first network node that includes a timer, for initiating a timer having a first timer value that is a non-zero positive number, a routing message forwarder, for forwarding a first routing message via a first path in response to receiving the first routing message before the timer expires, a routing message initiating circuit, for initiating a second routing message via the first path and a second path in response to not receiving the first routing message before the timer expires, a routing table generator, for constructing a current network topology and updating the current network topology, a routing metric evaluating circuit, for evaluating the first path and the second path within the current network topology, and a first wireless interface, and a second network node including a second wireless interface, for communicating with the first network node via the first wireless interface.

In order to make the aforementioned features and advantages of the present disclosure comprehensible, preferred embodiments accompanied with figures are described in detail below. It is to be understood that both the foregoing general description and the following detailed description are exemplary, and are intended to provide further explanation of the disclosure as claimed.

## BRIEF DESCRIPTION OF THE DRAWINGS

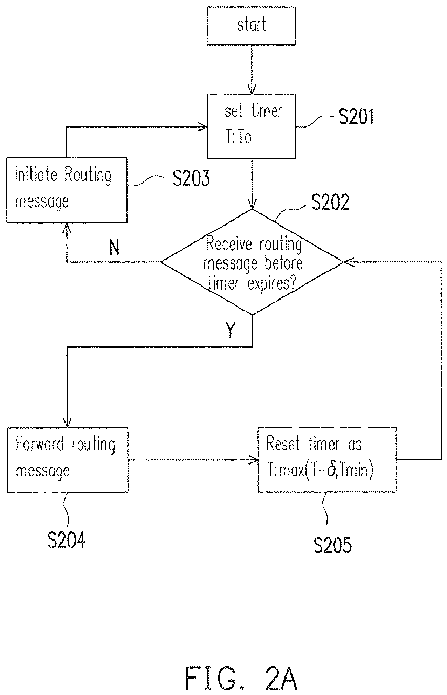

The accompanying drawings are included to provide a further understanding of the disclosure, and are incorporated in and constitute a part of this specification. All drawings except fig. 2A illustrate background art examples of the disclosure and, together with the description, serve to explain the principles of the disclosure.

FIG. 1A illustrates a proximity-based relay network according to one background art example of the disclosure.

FIG. 1B illustrates a proposed routing method that is applicable to a network node according to one background art example of the disclosure.

FIG. 1C illustrates a network node in terms of a functional block diagram according to one background art example of the disclosure.

FIG. 1D a proximity-based relay network according to one background art example of the disclosure.

FIG. 2A illustrates the initiating and relaying process of a routing message according to an embodiment of the invention.

FIG. 2B illustrates an example of determining an initiative source by using the diagram of FIG. 2A.

FIG. 3A illustrates transmitting a routing message according to one background art example of the disclosure.

FIG. 3B illustrates maintaining a routing table according to one background art example of the disclosure.

FIG. 4 illustrates link failure recovery according to one background art example of the disclosure.

FIG. 5 illustrates maintaining a routing table during a link failure recovery according to one background art example of the disclosure.

FIG. 6 summarizes the proposed routing method that is applicable to a network node according to one background art example of the disclosure.

## DETAILED DESCRIPTION OF DISCLOSED EMBODIMENTS

The disclosure proposes a routing message delivery method that is applicable to a network node in a proximity-based relay network, a network node using the same method, and a communication network using the same method. Within a proximity-based relay network, a network node would be able to determine whether to forward or to initiate a routing message according to a timer setting so as to prevent overflooding the network. Also, metrics for all possible routes would be evaluated by a network node according to an algorithm in order to determine the best route to transmit data. Moreover, under the circumstance in which a network node is newly activated or suddenly deactivated, the dynamic network topology of the proximity-based relay network would update the routing record within each network node so as to eliminate network errors.

Reference will now be made in detail to the present exemplary embodiments of the disclosure, examples of which are illustrated in the accompanying drawings. Wherever possible, the same reference numbers are used in the drawings and the description to refer to the same or like parts.

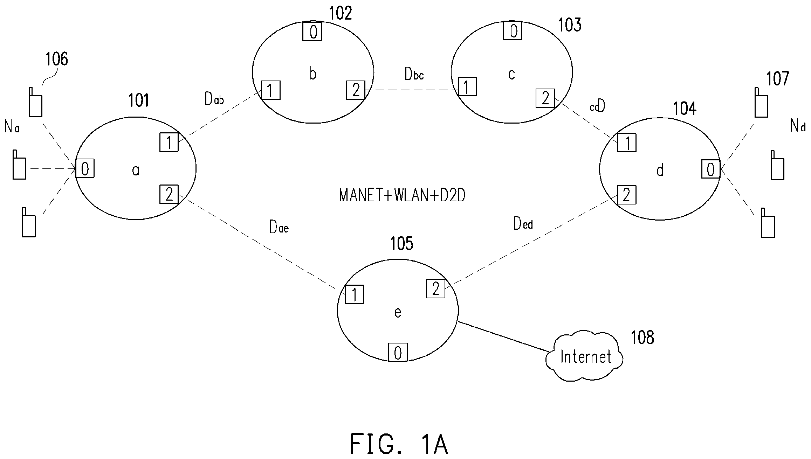

FIG. 1A illustrates an exemplary proximity-based relay network according to one back ground art example of the disclosure. The exemplary proximity-based relay network could be similar to a modified mobile ad-hoc network (MANET) that could support a wireless local area network (WLAN) and device to device (D2D) communications. The exemplary proximity-based relay network may include a plurality of network nodes such as network nodes 101~105 in FIG. 1A. Each network node could be a Wi-Fi access point (AP) without wired connections. Each network would have a plurality of network interfaces which are physical hardware interfaces such as hardware cards that adhere to a specific communication standard not limited to IEEE 802.1x. For example, network node 101 may have three network interfaces, a first network interface, a second network interface, and a third network interface labeled '0', '1', and '2' respectively. Network interface 0 of the network node 101 is dedicated to providing a wireless connection to the WLAN 106, network interface 1 of network node 101 is wirelessly connected to network node 102, and network interface 2 of network node 102 is connected to network node 105. A similar principle would apply to other network nodes. For example, network interface 0 of network node 103 could be used to service a WLAN while network interface 1 and 2 could be used to connect to two different network nodes. Alternatively, any one of the network interfaces could be used for connecting to the internet through providing a Wi-Fi service.

Also each network node would be able to directly connect to other network nodes as long as other network nodes are within a wireless range of its network interfaces. For instance, network node 101 would be able to connect to network node 102 and network node 105 as network node 102 and network node 105 are within the wireless range of the network interface 1 and 2 of the network node 101. However, if the network node 101 were to have a fourth network interface, network interface 3 (not shown), and the network node 103 is assumed to be within the range of the network interface 3, then the network node 101 would also be able to connect to the network node 103.

Each network node may support a WLAN having one or more user devices. For example, the network node 101 has a WLAN 106 under its domain in order to provide wireless connections for mobile electronic devices which may wish to connect to the internet. However, internet connection would only be directly provided by the network node that has the hardware infrastructure to access the internet. For a network node that is without the hardware infrastructure for direct internet access, internet connection could be provided indirectly by relaying the internet connection through one or more network nodes. For example, the network node 101 may either access the internet directly or may have to indirectly provide an internet connection by routing service requests of the WLAN 106 to another network node that has the direct internet access. However, only the network node 105 has direct access to the internet in the example of FIG. 1A and thus WLAN 106 would need to connect to the internet indirectly either through the paths of $D_{ae}$ or through the path of $D_{ab}$, $D_{bc}$, $D_{cd}$, and $D_{ed}$. The network nodes 101 ~ 105 could be, for example, wireless routers with multiple network interfaces, and network node 105 in particular could be a wireless router connected to a modem (not shown). From the perspective of user devices, a network node could be perceived as an ordinary Wi-Fi AP.

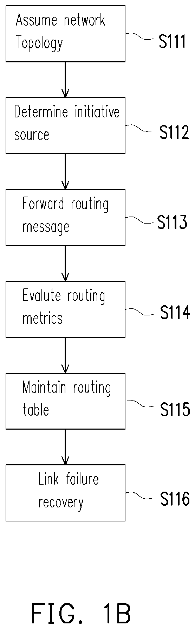

FIG. 1B illustrates an overview of the proposed routing method that is applicable to a proximity-based relay network according to one background art example of the disclosure. In step S111, a wireless topology is assumed by a network node. For example, a network node may obtain information of the most recently known wireless topology from a routing table which could be stored in a non-transitory storage medium native to the wireless node. By obtaining information of the wireless topology, a network node would know all the possible paths to deliver information to a particular connected to a modem (not shown). From the perspective of user devices, a network node could be perceived as an ordinary Wi-Fi AP.

FIG. 1B illustrates an overview of the proposed routing method that is applicable to a proximity-based relay network according to one background art example of the disclosure. In step S111, a wireless topology is assumed by a network node. For example, a network node may obtain information of the most recently known wireless topology from a routing table which could be stored in a non-transitory storage medium native to the wireless node. By obtaining information of the wireless topology, a network node would know all the possible paths to deliver information to a particular network node and thus would be able to know the best neighboring node to deliver at least one data packet. In step S112, the initiative source of a routing message would be determined. In particular, a network node would determine whether to initiate its own routing message by initiating a timer to a first default value that is a non-zero, positive number. If the timer that has been set to the first default value has expired without receiving a routing message from another neighboring network node, then the network node may initiate a routing message and reset the timer to the first default value after transmitting the routing message. The routing messages would be for constructing or updating a network topology. The routing messages would be delivered in a flooding manner as a network node would transmit a routing message to each neighboring node, which is an adjacent network node directly accessible within the range of a wireless interface within the network node. After constructing the network topology, a network node would select the optimum path to deliver data packets.

In step S113, if the network node has instead received a routing message positioning satellite (GPS) information, battery status of a network node, and so forth.

However, to determine which neighboring network node to forward the data packets to, the network would need to know the optimum path. Thus in step S114, the network node would objectively evaluate all the paths between the network node and the target network node by calculating a metric for all the paths. The calculation of the metric would be elaborated later on in this disclosure. After an optimal path has been determined according to the path with the best metric, the routing message will be transmitted. If the routing message was received to be forwarded, information of the current network node as well as the selected path will be appended to the routing message previously received. In step S115, the network node would update the routing table stored within the storage medium of the network node so that the routing table contains the most current information of the network topology. In step S116, the network node would perform link failure recovery if a network node within its own proximity-based relay network is suddenly offline. Details of each step of FIG. 1B will be elaborated later in the disclosure.

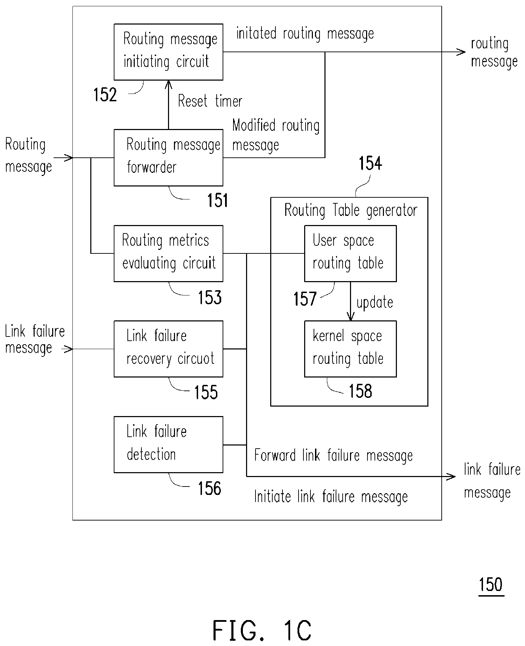

FIG. 1C illustrates a network node in terms of a functional block diagram according to one background art example of the disclosure. A network node 150 would include at least but not limited to multiple network interfaces (shown in FIG. 1A), a Routing Message Forwarder Circuit 151, a Routing Message Initiating Circuit 152, a Routing Metrics Evaluating Circuit 153, a Routing Table Generator Circuit 154, a Link Failure recovery Circuit 155, and a Link Failure Detection Circuit 156. Each of the Circuits 151~156 could be interfaced with or be a part of a central processing unit (CPU) (not shown) and a non-transitory storage medium (not shown). Also each of the Circuits 151~156 could be electrically connected directly or indirectly with the aforementioned network interfaces. The Routing Table Generator Circuit 154 may interface with the storage medium to generate, maintain, and update a User Space Routing Table 157 and a Kernel Space Routing Table 158. Each network interface may include a transmitter, a receiver, and one or more antennas for transmitting and receiving wireless signals. From the receiver of a network interface, the network node 150 may receive a routing message from another network node, a link failure message from another network node, and messages to be initiated and delivered from the WLAN. Specific details of each of the Circuits 151~156 will be further elaborated later on in this disclosure.

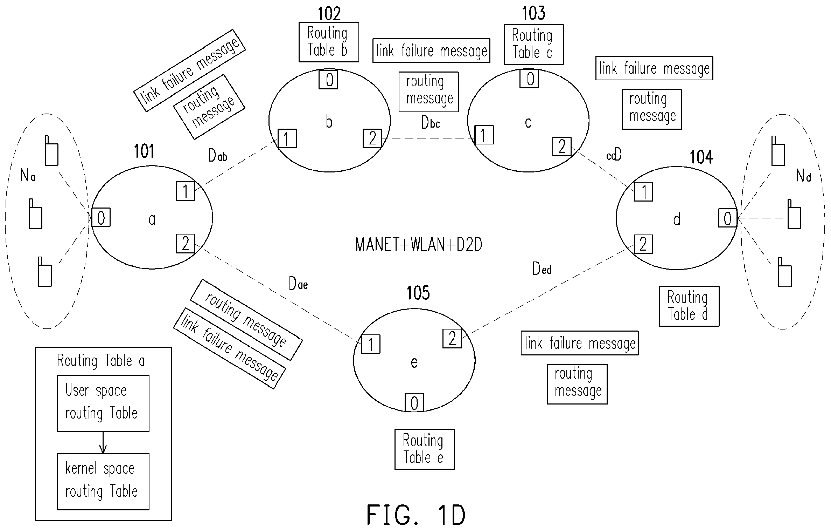

FIG. 1D illustrates an exemplary proximity-based relay network based on the exemplary network of FIG. 1A with further details. Between two network nodes that are connected, routing messages, data packets (not shown), and / or link failure messages could be exchanged. Each of the network nodes 101~105 may initiate one or more data packets to be relayed by other network nodes to the network node that has the hardware infrastructure to connect to the internet. Each of the network nodes such as network node 101 would store a Routing Table which includes a user Space Routing Table and a Kernel Space routing table. Based on the routing table and the calculated metric associated with each route, a network node would know the best path to deliver at least one of a data packet. The optimal path or route is the route or path having the best calculated metric value.

Steps S112 and S113 of FIG. 1B is to be elaborated with further details. FIG. 2A illustrates the initiating and relaying process of a routing message according to an embodiment of the invention. FIG. 1C will also be referred to along with FIG. 2A. In step S201, the processor of the network node may set the timer to a first default value which is a non-zero positive number and subsequently start the timer. In step S202, the Routing Message Forwarder Circuit 151 may interact with a CPU of the network node to determine whether a network interface of the network node has received a routing message before the first default value of the timer has expired. If a routing message has been received before the first default value of the timer has expired by a network node, then in step S204 the Routing Message Forwarder Circuit 151 will forward the routing message through a transmitter of a network interface. Subsequently, in step S205, the Routing Message Forwarder Circuit 151 will reset the timer to a second default value which is the first default value subtracted by a predetermined $\delta$ value, where the

$\delta$ value is a positive, non-zero value. If another routing message has been received before the second default value has expired, then steps S204 and S205 would be repeat by resetting the timer to a third default value which is less than the second default value $\delta$ value and less than the first default value by 2x $\delta$ value.

If no routing message is received before the first default value of the timer has expired, then in step S203, the Routing Message Initiating Circuit 152 would initiate a routing message and transmit the routing message through the transmitter of a network interface. Step S201 would then repeat as the Routing Message Initiating Circuit 152 resets the timer back to the first default value with the assistance of a CPU. When a routing message is forwarded, the Routing Message Forwarder Circuit 151 would append the routing message with additional information such as information related to the path and information related to the network node.

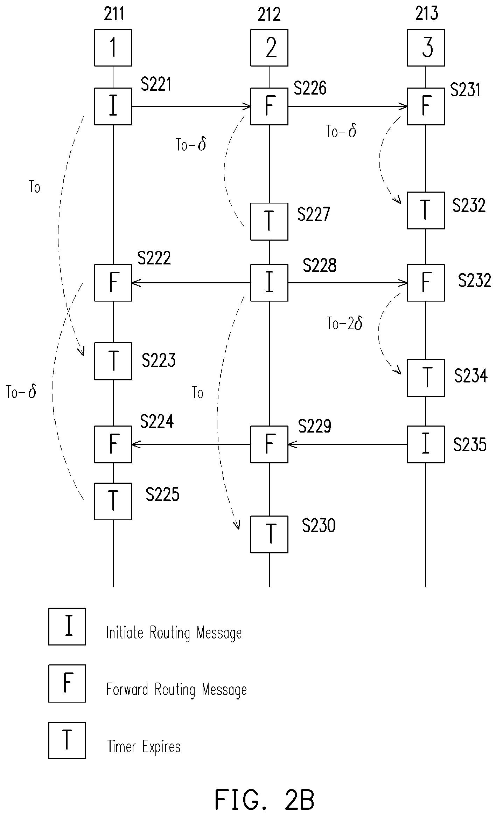

FIG. 2B illustrates an example of determining an initiative source by using the diagram of FIG. 2A. In this example, three network nodes 211, 212, and 213 are assumed to be connected in sequence. In step S221, network node 211 is assumed to have initiated a first routing message and set a timer to a first default value. The first routing message is transmitted to network node 212. The timer is set to expire at time $T_0$ in step S223 if no routing message is received. However, in step S222, if a second routing message is assumed to have been received, then the second routing message would be forwarded and the timer will be reset to expire at time $T_0$ - $\delta$ in step S225. However, before the timer is expired in step S225, a third routing message has been received in step S224, and the network node will forward the third routing message in response to receiving the third routing message.

For the example of network node 212, in step S226, the network node 212 has received the first routing message from the network node 211 and subsequently forward the first routing message to the network node 213. The network node 212 would then reset the timer to the second default value which is $T_0$ - $\delta$ to be expired in step S227. However, it is assumed that no routing message was actually received before step S227 would have occurred, then in step S228, the network node 212 would initiate a fourth routing message to be transmitted to network node 211 and network node 213 and reset the time to a first default value to be expired in step S230. However, it is assumed that a fifth routing message was received in step S229 from network node 213. The timer will then be reset to the second default value.

For the example of network node 213, in step S231, the network node 213 has received the first routing message to be forwarded. The network node 213 then forward the routing message and reset the timer to the second default value which will expire in step S232. However, in step S232, the network node 213 has received the second routing message from the network node 212. Assuming that in step S232, the second routing message is received before the second default value has expired, then in step S232, the timer will be reset to a third default value which is $T_0 - 2x\,\delta$ to be expired in step S234. In step S235, since no routing message was received before the timer set to the third default value has expired, the network node 213 would initiate a routing message to be forwarded. It should be noted that the third default value is not necessarily less than the second default value by $\delta$ but could be less than the second default value by a different value from $\delta$, as long as the third default value is smaller than the second default value.

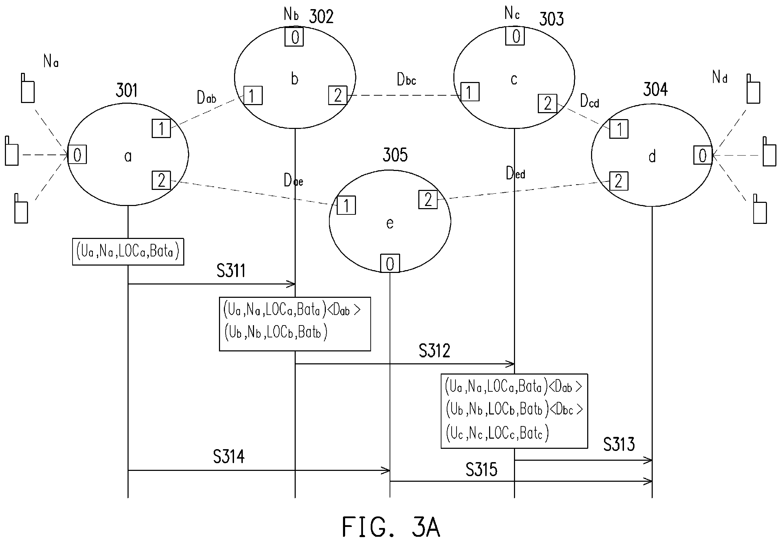

FIG. 3A illustrates transmitting a routing message according to one background art example of the disclosure. In step S301, network node 301 initiates a first routing message, and the Routing Message Initiating Circuit 152 of network node 301 would transmit the first routing message via network interface 2 of the network node 301. The first routing message would include parameters not limited to $U_a$, $N_a$, $Loc_a$, $Bat_a$, where $U_a$ is the user number of a user device wirelessly attached to the network node 301, $N_a$ is the AP Subnet address of network node 301, $Bat_a$ is the battery status of the network node 301, and $Loc_a$ is the GPS location of the network node 301. The routing message is received by the network interface 1 of the network node 302. The distance between network node 301 and network node 302 is denoted as $D_{ab}$ in FIG. 3A. In response to receiving the first routing message, the network node 302 would forward the first routing message to its destination by appending a distance information and information related to network node 302 to the first routing message as a second routing message. In step S312, the network node 302 would transmit to the network node 303 the second routing message including ($U_a$, $N_a$, $Loc_a$, $Bat_a$), $<D_{ab}>$, and ($U_b$, $N_b$, $Loc_b$, $Bat_b$), and wherein $U_b$ is the user number of a user device wirelessly attached to the network node 301, $N_b$ is the AP Subnet address of network node 302, $Bat_b$ is the battery status of the network node 301, and $Loc_b$ is the GPS location of the network node 301. In step S 313, the network node 303 would forward to network node 304 the second routing message by appending the second routing message with the information related to the distance between the network node 303 and the network node 304 as well as the information of the network node 304 so as to generate a third routing message which would include ($U_a$, $N_a$, $Loc_a$, $Bat_a$), $<D_{ab}>$, and ($U_b$, $N_b$, $Loc_b$, $Bat_b$), $<Dab>$, and ($U_b$, $N_b$, $Loc_b$, $Bat_b$). Alternatively, in step S314 the network node 301 could have transmitted the first routing message to network node 305, which would in step S315 deliver the second routing message to network node 304. In that case, the third routing message would include ($U_a$, $N_a$, $Loc_a$, $Bat_a$), $<D_{ab}>$, and ($U_e$, $N_e$, $Loc_e$, $Bat_e$). By having a node appending information to a received routing message, the quantity of messages could be reduced.

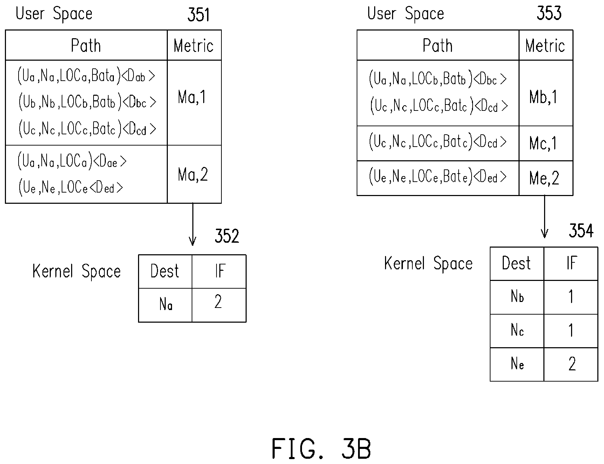

FIG. 3B illustrates maintaining a routing table according to one background art example of the disclosure. In general, a network node may utilize the Routing Table Generator 154 to generate, maintain, and update the routing table stored within each network node. Each routing table may include a User Space 157 and a Kernel Space 158. The User Space is associated with the application layer so that an operator of a network node may access the User Space routing table. The kernel includes information that is accessible by the operation system of a network node but might not be easily accessible by the application layer. Since information in the routing table is simple, routing efficiency could be improved. Also by appending information to received message, multiple node information could be retrieved at once.

As for the example of FIG. 3A, based on information previously received, the network node 301 would know that in order to transmit a routing message to network node 304, there could be two possible paths by referring to the Routing Table of FIG. 3B. The first path would traverse through $<D_{ab}>$, $<D_{bc}>$, $<D_{cd}>$, and the second path would traverse through $<D_{ae}>$ and $<D_{ed}>$ as evident in the User Space portion 351 of the Routing Table. In a Kernal Space portion, it shows the destination and the interface number that is to reach the destination. For example, in the Kernal Space 352, it shows that the destination associated with the second path is Na, which is the AP Sub address of network node 301, and the network interface is "2". Similarly, the User Space Table 353 shows the paths and their corresponding metrics, and the Kernal Space 354 shows the destinations and their corresponding network interfaces. In order to evaluate which one of the two paths is the optimal path, the network node 301 would utilize the Routing Metrics Evaluating Circuit 153 to calculate multiple routing metrics, such as the metrics $M_{a1}$ and $M_{a2}$ in the User Space 351 portion of the Routing Table. The calculation of metrics would correspond to step S114 of FIG. 1B.

The metric in general would be calculated based on the node type of a network node, the node battery status, distance between nodes, and user number. In detail, the metric, Wr, could be calculated as follows:

$w_r = 1$ if the destination is directly next to the source, otherwise

$$w_r = W_M{}^{N_M} * W_D{}^{ND} * \gamma^{I()} * \Pi_{\forall i}\left(\frac{d_i}{d_o}\right)^{-1}$$

Where $W_M$ and $W_D$ are respectively weights associated with MANAT and delay-and-disruption tolerant network (DTN) relay, respectively, and $N_M$ and $N_D$ are the numbers of MANAT and DTN relays, respectively. The parameter $\gamma$ would be a very small value that is meant to limit the use of low battery or over-loaded route. $I(\cdot)=0$ only when every node on a particular route has battery level higher than a predefined threshold $B_{th}$, and every node on the particular route is not over-loaded based on the number of attached user determined from the user number parameter. If the above mentioned criteria is not

satisfied, $I(\cdot)=1$. Also $d_i$ is the distance of i-th segment of a route, $d_0$ is a reference distance, and I is distance impact factor. The parameters could be configured subject to different purposes or services. For example, for streaming applications, MANET is preferred over DTN as $1>W_M>W_D$, and for delay-tolerant applications, DTN is preferred over MANET as $1>W_D>W_M$. In this way, sub-routes consistency would be guaranteed.

After the Routing Metrics Evaluating Circuit 153 calculates a metric for each route, a network node would be able to select the optimal path with the best metric number to deliver one or more data packets. As for the example of FIG. 3A, after the metrics are calculated as shown in the Routing Table of FIG. 3B, assuming that Ma,2 has a better metric value than Ma,1, then the path of $<D_{ae}>$ and $<D_{ed}>$ would be selected. The Routing Table Generator 154 may then update the User Space Routing table 157 and the Kernel Space Routing table 158 to record the calculated metrics in the Routing Table. Also, as a routing message is initiated by the Routing Message Initiated Circuit 152 or forwarded by the Routing Message Forwarder Circuit 151, the Routing Table Generator may update the Routing Table to reflect the path information selected or appended by each network node.

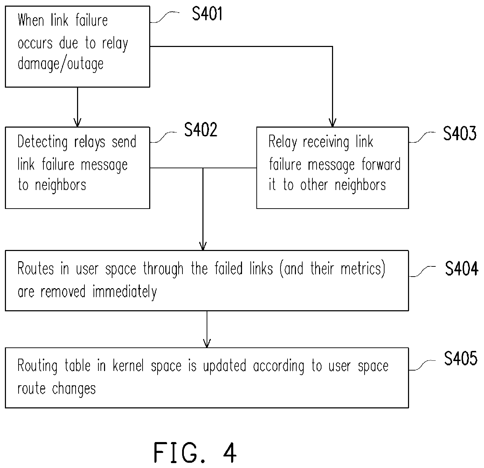

FIG. 4 illustrates link failure recovery according to one background art example of the disclosure. In step S401, it is assumed that a link failure has occurred because of relay damage or outage. In step S402, the link failure detection circuit 156 of a network node has detected a network error that is intrinsic to the network node, and thus transmits a link failure message to inform the neighboring network nodes. Instead of step S402, in step S403, the link failure recovery circuit 155 may receive a link failure message from another neighboring node. In response to receiving the link failure message, the link failure recovery circuit 155 may forward the link failure message to neighboring network nodes via a transmitter of a network interface. In step S404, the network node would remove the failed route in the User Space Routing Table 157 so as to prevent the route from being selected by the network node. In step S405, the Kernel Space Routing Table 158 would be updated according to the route changes in the User Space Routing Table 157.

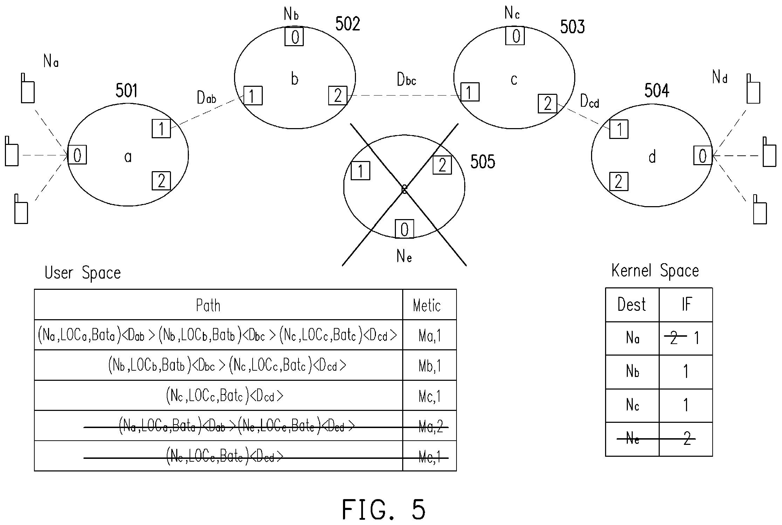

FIG. 5 is an example that illustrates the maintenance of a routing table during a link failure recovery according to one background art example of the disclosure. FIG. 4 and FIG. 5 would be referred together. In step S401, it is assumed that network node 505 has experienced a network link failure because of relay damage or outage such that the network node 505 is unable to connect to network node 501 and network node 504. In step 402, the network node 501 and 503 may have detected the network failure of the network node 505 and transmit a link failure message to the neighboring nodes to inform network node 501 and network node 504 of the failure. In particular, in step S403, the network node 501 may transmit a link failure message to network node 502, and the network node 504 may transmit a link failure message to the network node 503 upon detecting the failure of the network node 505. In step S404, assuming that the User Space 511 and Kernal Space 512 are maintained within network node 504, the User Space 511 of a Routing Table would be updated by removing failed routes from the Routing Table. For this example, the routing information associated with the path $<D_{ae}>$ and $<D_{ed}>$ would be removed by removing the last two entries of the User Space 511, since notwork node 505 has been severed from the rest of the network, the paths $<D_{ae}>$ and $<D_{ed}>$ would be unavailable. In step 405, the Kernal Space Table 512 would be updated to reflect the changes made to the User Space table 511. For this example, the network interface 2 that corresponds to the destination network node, $N_a$, will no longer be available and thus the interface parameter that corresponds to $N_a$ of Kernal Space 512 would be changed from 2 to 1 as the path to $N_a$ would be re-routed to network interface 1 of $N_a$ instead. , and also the Kernel Space 512 table shows that the network interface 2 of $N_e$ together with $N_e$ would be unavailable as $N_e$ is be entirely unavailable because of failure.

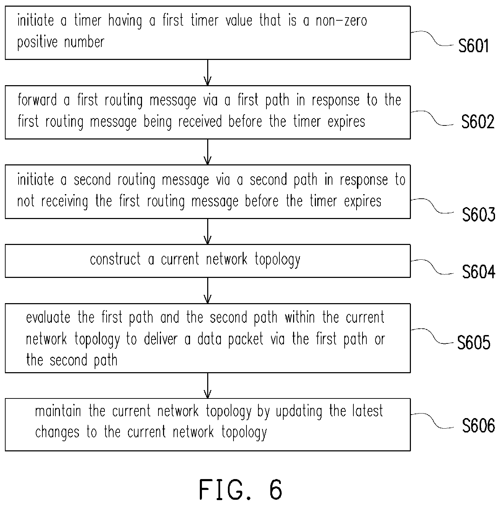

FIG. 6 summarizes the proposed routing method that is applicable to a network node according to one background art example of the disclosure. It should be noted that the disclosure does not limit the following steps in the exact sequence. In step S601, the network node would initiate a timer having a first timer value that is a non-zero positive number. In step S602, th e network node would forward a first routing message via a first path in response to the first routing message being received before the timer expires. Otherwise, in step S603 the network node would initiate a second routing message via the first path and a second path in response to not receiving the first routing message before the timer expires as the network node may initiate a routing message by flooding to all or at least one neighboring network nodes. In step S604, the network node may construct a current network topology. In step S605, the network node would evaluate the first path and the second path within the current network topology to deliver a data packet via the first path or the second path. In step S606, the network node may maintain the current network topology by updating the latest changes to the current network topology.

In one of the ba ckground art examples, forwarding the first routing message in response to receiving the first routing message before the timer expires may further include resetting the timer as a second timer value that is less than the first timer value by $\delta$ after transmitting the first routing message, wherein $\delta$ is a non-zero positive number and forwarding a third routing message if the third routing message is received before the second timer value expires.

In one of the background art examples, initiating the second routing message in response to not receiving the first routing message before the timer expires may further include resetting the timer as the first timer value after transmitting the second routing message and determining whether a fourth routing message is received before the first timer value expires.

In one of the background art examples, the aforementioned forwarding the first routing message may include receiving the first routing message comprising a first set of network node parameters and a first distance parameter, appending the first routing message with the second set of network node parameters and a second distance parameter, and forwarding the first routing message comprising the first set of network node parameters, the second set of network node parameters, the first distance parameter, and the second distance parameter.

In one of the background art examples, the first set of network node parameters and the second set of network node parameters may include a user number, an access point (AP) subnet address, a global positioning satellite (GPS) address, and a battery status.

In one of the background art examples, the aforementioned evaluating the first path and the second path within the current network topology may include calculating multiple routing metrics based on a type of a target node, a battery status of the target node, a distance between the network node and the target node, and a user number, and evaluating an optimal path having the best routing metric to deliver a data packet. The above mentioned node type is a weight associated with a Mobile Ad Hoc Network (MANET) relay or a delay and disruption tolerant network (DTN) relay.

In one of the background art examples, the aforementioned updating the current network topology may include updating a routing table comprising a User Space Routing Table and a Kernel Space Routing Table. The User Space Routing Table may include the first path and a first metric associated with the first path. The Kernel Space Routing Table may include a destination network node and a network interface number of the destination network node.

The aforementioned updating network topology may further include detecting a failure of another network node, transmitting a first failure message to other neighboring nodes, and forwarding a second failure message to other neighboring nodes.

In one of the background art examples, the aforementioned updating network topology may further include removing the another network node t associated with the failure from the User Space Routing Table and the Kernel Space Routing Table; and updating the routing table to reflect the changes associated with removing the another network node.

In view of the aforementioned descriptions, the disclosure is suitable for use by a communication system having a proximity-based relay network and may reduce the necessary information to be exchanged among network nodes when each network node is required to maintain and update an accurate current network topology. Also, the disclosure when used by a proximity-based relay network would accurately determine a suitable route to deliver a message so as to optimize the overall network performance. Furthermore, the disclosure when used by a proximity-based relay network would react to sudden changes of network topology so as to minimize the probability of network errors caused by having different knowledge of the network topology among network nodes.

No element, act, or instruction used in the description of the present application should be construed as critical or essential to the present disclosure unless explicitly described as such. Also, as used herein, each of the indefinite articles "a" and "an" is intended to exclude more than one item. If only one item is intended, the terms "a single" or similar languages could be used. Furthermore, the terms "any of" followed by a listing of a plurality of items and/or a plurality of categories of items, as used herein, are intended to include "any of', "any combination of', "any multiple of', and/or "any combination of multiples of the items and/or the categories of items, individually or in conjunction with other items and/or other categories of items. Further, as used herein, the term "set" is intended to include any number of items, including zero. Further, as used herein, the term "number" is intended to include any number, including zero.

## Claims

1. A routing message delivery method applicable to a network node (101 to 105, 150, 301 to 305, 501 to 505) in a proximity-based relay network, comprising:

   initiating a timer having a first timer value that is a non-zero positive number;
   forwarding a first routing message in response to receiving the first routing message before the timer expires, wherein forwarding the first routing message comprises appending information of the network node and a selected path, and wherein the timer resets as a second timer value that is less than the first timer value by $\delta$ after transmitting the first routing message and $\delta$ is a non-zero positive number;
   initiating a second routing message in response to not receiving the first routing message before the timer expires and resetting the timer to the first timer value;
   transmitting the second routing message, wherein the first routing message and the second routing message are delivered in a flooding manner to adjacent network nodes directly accessible within the range of the network node;
   constructing a current network topology through the first routing message and the second routing message;
   evaluating an optimal path having a best routing metric within the current network topology to deliver at least one data packet; and
   updating the current network topology.

**2.** The method of claim 1, wherein forwarding the first routing message in response to receiving the first routing message before the timer expires further comprising:

forwarding a third routing message if the third routing message is received before the second timer value expires; and
resetting the timer to a third timer value that is smaller than the second timer value.

**3.** The method of claim 1, wherein initiating the second routing message in response to not receiving the first routing message before the timer expires further comprising:

resetting the timer as the first timer value after transmitting the second routing message; and
determining whether a fourth routing message is received before the first timer value expires.

**4.** The method of claim 1, wherein forwarding the first routing message comprising:

receiving the first routing message comprising a first set of network node parameters and a first distance parameter;
appending the first routing message with a second set of network node parameters and a second distance parameter; and
forwarding the first routing message comprising the first set of network node parameters, the second set of network node parameters, the first distance parameter, and the second distance parameter.

**5.** The method of claim 4, wherein the first set of network node parameters and the second set of network node parameters comprising:

a number of attached users;
an access point, AP, subnet address;
a global positioning satellite, GPS, address; and
a battery status.

**6.** The method of claim 1, wherein evaluating the first path and the second path within the current network topology comprising:

calculating multiple routing metrics based on a type of a target node, a battery status of the target node, a distance between the network node (101 to 105, 150, 301 to 305, 501 to 505) and the target node, and a number of attached users; and
evaluating an optimal path having a best routing metric to deliver at least one data packet.

**7.** The method of claim 6, wherein the node type is a weight associated with a Mobile Ad Hoc Network, MANET, relay or a delay and disruption tolerant network, DTN, relay.

**8.** The method of claim 1, wherein updating the current network topology comprising:

updating a routing table comprising a User Space Routing Table and a Kernel Space Routing Table, wherein
the User Space Routing Table comprises:

the first path; and
a first metric associated with the first path and

the Kernel Space Routing Table comprises

a destination network node; and
a network interface number of the destination network node.

**9.** The method of claim 8 further comprising:

detecting a failure of another network node;
transmitting a first failure message to other neighboring nodes; and
forwarding a second failure message to other neighboring nodes.

**10.** The method of claim 9, further comprising:

removing the another network node associated with the failure from the User Space Routing Table and the Kernel Space Routing Table; and
updating the routing table.

**11.** A network node (101 to 105, 150, 301 to 305, 501 to 505) for a proximity-based relay network, the network node comprising:

a timer, for initiating a timer having a first timer value that is a non-zero positive number;
a routing message forwarder (151), for forwarding a first routing message in response to receiving the first routing message before the timer expires, wherein forwarding the first routing message comprises appending information of the network node and a selected path, and wherein the timer resets as a second timer value that is less than the first timer value by $\delta$ after transmitting the first routing message and $\delta$ is a non-zero positive number;
a routing message initiating circuit (152), for initiating a second routing message in response to not receiving the first routing message before the timer expires, resetting the timer to the first timer value, and transmitting the second routing message, wherein the first routing message and the second routing message are delivered in a flooding manner to adjacent network nodes directly accessible within the range of the network node;

a routing table generator (154), for constructing a current network topology through the first routing message and the second routing message and updating the current network topology; and

a routing metric evaluating circuit (153), for evaluating an optimal path having a best routing metric within the current network topology to deliver at least one data packet.

12. The network node (101 to 105, 150, 301 to 305, 501 to 505) of claim 11, wherein the routing message forwarder (151) is further configured for:

forwarding a third routing message if the third routing message is received before the second timer value expires; and

resetting the timer to a third timer value that is smaller than the second timer value.

13. The network node (101 to 105, 150, 301 to 305, 501 to 505) of claim 11, wherein the routing message initiating circuit (152) is further configured for:

resetting the timer as the first timer value after transmitting the second routing message; and

determining whether a fourth routing message is received before the first timer value expires.

14. The network node (101 to 105, 150, 301 to 305, 501 to 505) of claim 11 further comprising a transmitter and a receiver, and the routing message forwarder (151) forwarding the first routing message comprising:

receiving via the receiver the first routing message comprising a first set of network node parameters and a first distance parameter;

appending the first routing message with a second set of network node parameters and a second distance parameter; and

forwarding via the transmitter the first routing message comprising the first set of network node parameters, the second set of network node parameters, the first distance parameter, and the second distance parameter.

15. The network node (101 to 105, 150, 301 to 305, 501 to 505) of claim 14, wherein the first set of network node parameters and the second set of network node parameters comprising:

a number of attached users;

an access point, AP, subnet address;
a global positioning satellite, GPS, address; and
a battery status.

16. The network node (101 to 105, 150, 301 to 305, 501 to 505) of claim 11 further comprising a transmitter and the routing metric evaluating circuit (153) for evaluating the first path and the second path within the current network topology comprising:

calculating multiple routing metrics based on a type of a target node, a battery status of the target node, a distance between the network node (101 to 105, 150, 301 to 305, 501 to 505) and the target node, and a number of attached users; and

forwarding via the transmitter at least one data packet via an optimal path having a best routing metric.

17. The network node (101 to 105, 150, 301 to 305, 501 to 505) of claim 16, wherein the node type is a weight associated with a Mobile Ad Hoc Network, MANET, relay or a delay and disruption tolerant network, DTN, relay.

18. The network node (101 to 105, 150, 301 to 305, 501 to 505) of claim 11, wherein routing table generator (154) for updating the current network topology comprising:

updating a routing table comprising a User Space Routing Table and a Kernel Space Routing Table, wherein

the User Space Routing Table comprises:

the first path; and
a first metric associated with the first path and

the Kernel Space Routing Table comprises

a destination network node; and
a network interface number of the destination network node.

19. The network node (101 to 105, 150, 301 to 305, 501 to 505) of claim 18 further comprising:
a link failure detection circuit (156) for:

detecting a failure of another network node;
transmitting a first failure message to other neighboring nodes; and
forwarding a second failure message to other neighboring nodes.

20. The network node (101 to 105, 150, 301 to 305, 501 to 505) of claim 19, wherein the link failure detection circuit (156) is further configured for:

removing the another network node associated with the failure from the User Space Routing Table and the Kernel Space Routing Table via the routing table generator (154); and updating the routing table.

21. A proximity-based relay network, comprising

a first network node (101 to 105, 150, 301 to 305, 501 to 505) comprising:

a timer, for initiating a timer having a first timer value that is a non-zero positive number;
a routing message forwarder (151), for forwarding a first routing message in response to receiving the first routing message before the timer expires, wherein forwarding the first routing message comprises appending information of the network node and a selected path, and wherein the timer reset as a second timer value that is less than the first timer value by δ after transmitting the first routing message and δ is a non-zero positive number;
a routing message initiating circuit (152), for initiating a second routing message in response to not receiving the first routing message before the timer expires, resetting the timer to the first timer value, and transmitting the second routing message, wherein the first routing message and the second routing message are delivered in a flooding manner to adjacent network nodes directly accessible within the range of the network node;
a routing table generator (154), for constructing a current network topology through the first routing message and the second routing message and updating the current network topology;
a routing metric evaluating circuit (153), for evaluating an optimal path having a best routing metric within the current network topology to deliver at least one data packet; and
a first wireless interface; and

a second network node (101 to 105, 150, 301 to 305, 501 to 505) comprising:
a second wireless interface, for communicating with the first network node via the first wireless interface.

22. The communication network of claim 21, wherein the second network node (101 to 105, 150, 301 to 305, 501 to 505) further comprises:
a third wireless interface, for connecting to an internet.

23. The communication network of claim 22, wherein the second network node (101 to 105, 150, 301 to 305, 501 to 505) further comprises:
a fourth wireless interface, for providing a Wi-Fi service.

**Patentansprüche**

1. Nachrichtenzustellungs-Routing-Verfahren, das an einem Netzwerk-Knoten (101 bis 105, 150, 301 bis 305, 501 bis 505) in einem auf Nähe basierenden Relaisnetzwerk anwendbar ist und welches umfasst:

Initiieren eines ersten Timers mit einem ersten Timerwert, der eine positive Zahl ungleich Null, ist;
Übermitteln einer ersten Routing-Nachricht in Antwort auf den Empfang der ersten Routing-Nachricht bevor der Timer abläuft, wobei Übermitteln der ersten Routing-Nachricht umfasst, Anhängen von Information des Netzwerk-Knotens und eines gewählten Pfads, und wobei der Timer nach Übertragen der ersten Routing-Nachricht als ein zweiter Timerwert, der um δ kleiner ist als der erste Timerwert, rückstellt, und wobei δ eine positive Zahl ungleich Null ist;
Initiieren einer zweiten Routing-Nachricht in Antwort auf einen ausbleibenden Empfang der ersten Routing-Nachricht bevor der Timer abläuft und Rückstellen des Timers auf den ersten Timerwert;
Übertragen der zweiten Routing-Nachricht, wobei die erste Routing-Nachricht und die zweiten Routing-Nachricht zu benachbarten Netzwerk-Knotens, die im Bereich des Netzwerk-Knotens sind, überflutend geliefert werden;
Erstellen einer aktuellen Netzwerk-Topologie durch die erste Routing-Nachricht und die zweiten Routing-Nachricht;
Bewerten eines optimalen Pfads mit der besten Routing-Metrik in der aktuellen Netzwerk-Topologie, um mindestens ein Datenpaket zu liefern; und
Aktualisieren der aktuellen Netzwerk-Topologie.

2. Verfahren nach Anspruch 1, wobei Übermitteln der ersten Routing-Nachricht in Antwort auf den Empfang der erste Routing-Nachricht bevor der Timer abläuft weiter umfasst:

Übermitteln einer dritten Routing-Nachricht, wenn die dritte Routing-Nachricht empfangen wird, bevor der zweite Timerwert abläuft; und Rückstellen des Timers auf einen dritten Timerwert, der kleiner ist als der zweite Timerwert.

3. Verfahren nach Anspruch 1, wobei Initiieren der zweiten Routing-Nachricht in Antwort einen ausbleibenden Empfang der ersten Routing-Nachricht bevor der Timer abläuft weiter umfasst:

Rückstellen des Timers auf den ersten Timerwert nach Übertragen der zweiten Routing-Nachricht; und
Bestimmen, ob eine vierte Routing-Nachricht empfangen wird, bevor der erste Timerwert abläuft.

4. Verfahren nach Anspruch 1, wobei Übermitteln der ersten Routing-Nachricht umfasst:

Empfangen der ersten Routing-Nachricht, welche einen ersten Satz an Netzwerk-Knoten-Parameter und einen ersten Entfernungs-Parameter umfasst;
Anhängen eines zweiten Satz an Netzwerk-Knoten-Parameter und eines zweiten Entfernungs-Parameters an die erste Routing-Nachricht; und
Übermitteln der ersten Routing-Nachricht, die den ersten Satz an Netzwerk-Knoten-Parameter umfasst, den zweiten Satz an Netzwerk-Knoten-Parameters, den ersten Entfernungs-Parameter, und den zweiten Entfernungs-Parameter.

5. Verfahren nach Anspruch 4, wobei der erste Satz an Netzwerk-Knoten-Parameter und der zweiten Satz an Netzwerk-Knoten-Parameter umfasst:

eine Anzahl an angeschlossenen Nutzern;
eine Zugangspunkt, AP, Subnet-Adresse;
eine Globale Positionierungs-Satelliten, GPS, Adresse; und
einen Batterie-Zustand.

6. Verfahren nach Anspruch 1, wobei Bewerten des ersten Pfads und des zweiten Pfads in der aktuellen Netzwerk-Topologie umfasst:

Berechnen mehrerer Routing-Metriken basierend auf einem Typ eines Zielknotens, eines Batterie-Zustands des Zielknotens, einer Entfernung zwischen dem Netzwerk-Knoten (101 bis 105, 150, 301 bis 305, 501 bis 505) und dem Zielknoten, und einer Anzahl an angeschlossenen Nutzern; und
Bewerten eines optimalen Pfads mit einer besten Routing-Metrik, um mindestens ein Datenpaket zu liefern.

7. Verfahren nach Anspruch 6, wobei der Knotentyp eine Gewichtung ist, die mit einem Mobile Ad Hoc Netzwerk, MANET, -Relais oder einem Verzögerungs- und Unterbrechungs- toleranten Netzwerk, DTN, -Relais assoziiert ist.

8. Verfahren nach Anspruch 1, wobei Aktualisieren der aktuellen Netzwerk-Topologie umfasst:

Aktualisieren einer Routing-Tabelle, welche eine Nutzer-Bereich-Routing-Tabelle und eine Kernel-Bereich-Routing-Tabelle umfasst, worin die Nutzer-Bereich-Routing-Tabelle umfasst:

den ersten Pfad; und
eine mit dem ersten Pfad assoziierte erste Metrik, und

worin die Kernel-Bereich-Routing-Tabelle umfasst,

einen Bestimmungs-Netzwerk-Knoten; und
eine Netzwerk-Schnittstellen-Anzahl der Bestimmungs-Netzwerk-Knoten.

9. Verfahren nach Anspruch 8, welches weiter umfasst:

Erfassen eines Fehlers eines anderen Netzwerk-Knotens;
Übertragen einer ersten Fehlermeldung zu anderen benachbarten Knoten; und
Übermitteln einer zweiten Fehlermeldung zu anderen benachbarten Knoten.

10. Verfahren nach Anspruch 9, welches weiter umfasst:

Entfernen des anderen Netzwerk-Knotens, der mit dem Fehler assoziiert ist, aus der Nutzer-Bereich-Routing-Tabelle und der Kernel-Bereich-Routing-Tabelle; und
Aktualisieren der Routing-Tabelle.

11. Netzwerk-Knoten (101 bis 105, 150, 301 bis 305, 501 bis 505) für ein auf Nähe basierendes Relaisnetzwerk, wobei der Netzwerk-Knoten umfasst:

einen Timer, zum Initiieren eines Timer mit einem ersten Timerwert, der eine positive Zahl ungleich Null ist;
einen Routing-Nachricht-Übermittler (151), zum Übermitteln einer ersten Routing-Nachricht in Antwort auf den Empfang der ersten Routing-Nachricht bevor der Timer abläuft, wobei Übermitteln der ersten Routing-Nachricht umfasst, Anhängen von Information des Netzwerk-Knotens und eines gewählten Pfads, und wobei der Timer nach Übertragen der ersten Routing-Nachricht als ein zweiter Timerwert rückstellt, der um δ kleiner ist als der erste Timerwert, wobei δ eine positive Zahl ungleich Null ist;

einen Routing-Nachricht-Initiierungs-Schaltkreis (152), zum Initiieren einer zweiten Routing-Nachricht in Antwort auf einen ausbleibenden Empfang der ersten Routing-Nachricht bevor der Timer abläuft, Rückstellen des Timers auf den ersten Timerwert, und Übertragen der zweiten Routing-Nachricht, wobei die erste Routing-Nachricht und die zweite Routing-Nachricht zu benachbarten Netzwerk-Knotens, die in dem Bereich der Netzwerk-Knoten direkt zugänglich sind, überflutend geliefert werden;

einen Routing-Tabellen-Generator (154), zum Erzeugen einer aktuellen Netzwerk-Topologie durch die erste Routing-Nachricht und die zweite Routing-Nachricht und Aktualisieren der aktuellen Netzwerk-Topologie; und

einen Routing-Metrik-Bewertungs-Schaltkreis (153) zum Bewerten eines optimalen Pfads mit einer besten Routing-Metrik in der aktuellen Netzwerk-Topologie, um mindestens ein Datenpaket zu liefern.

12. Netzwerk-Knoten (101 bis 105, 150, 301 bis 305, 501 bis 505) nach Anspruch 11, wobei der Routing-Nachricht-Übermittler (151) weiter ausgestaltet ist zum:

Übermitteln einer dritten Routing-Nachricht, wenn die dritte Routing-Nachricht empfangen wird, bevor der zweite Timerwert abläuft; und Rückstellen des Timers auf einen dritten Timerwert, der kleiner ist als der zweite Timerwert.

13. Netzwerk-Knoten (101 bis 105, 150, 301 bis 305, 501 bis 505) nach Anspruch 11, worin der Routing-Nachricht-Initiierungs-Schaltkreis (152) weiter ausgestaltet ist, zum:

Rückstellen des Timers als den ersten Timerwert nach Übertragen der zweiten Routing-Nachricht; und Bestimmen, ob eine vierte Routing-Nachricht empfangen wird, bevor der erste Timerwert abläuft.

14. Netzwerk-Knoten (101 bis 105, 150, 301 bis 305, 501 bis 505) nach Anspruch 11, welcher weiter einen Transmitter und einen Empfänger umfasst, und worin Übermitteln der ersten Routing-Nachricht durch den Routing-Nachricht-Übermittler (151) umfasst:

Empfangen der ersten Routing-Nachricht durch den Empfänger, welche einen ersten Satz an Netzwerk-Knoten-Parameter und einen ersten Entfernungs-Parameter umfasst;

Anhängen eines zweiten Satz an Netzwerk-Knoten-Parameter und eines zweiten Entfernungs-Parameters an die erste Routing-Nachricht; und

Übermitteln mittels des Transmitters der ersten Routing-Nachricht, die den ersten Satz an Netzwerk-Knoten-Parameter, den zweiten Satz an Netzwerk-Knoten-Parameter, den ersten Entfernungs-Parameter, und den zweiten Entfernungs-Parameter umfasst.

15. Netzwerk-Knoten (101 bis 105, 150, 301 bis 305, 501 bis 505) nach Anspruch 14, worin der erste Satz an Netzwerk-Knoten-Parameter und der zweite Satz an Netzwerk-Knoten-Parameter umfasst:

eine Anzahl an angeschlossenen Nutzer; eine Zugangspunkt, AP, Subnet-Adresse; eine Globale Positionierungs-Satelliten, GPS, Adresse; und einen Batterie-Zustand.

16. Netzwerk-Knoten (101 bis 105, 150, 301 bis 305, 501 bis 505) nach Anspruch 11, welcher weiter einen Transmitter umfasst und worin der Routing-Metrik Bewertungs-Schaltkreis (153), der den ersten Pfad und den zweiten Pfad in der aktuellen Netzwerk-Topologie bewertet, umfasst:

Bewerten mehrerer Routing-Metriken basierend auf einem Typ eines Zielknoten, einem Batterie-Zustand des Zielknotens, einer Entfernung zwischen dem Netzwerk-Knoten (101 bis 105, 150, 301 bis 305, 501 bis 505) und dem Zielknoten, und einer Anzahl angeschlossener Nutzer; und

Übermitteln mindestens eines Datenpakets über einen optimalen Pfad mit einer besten Routing-Metrik über den Transmitter.

17. Netzwerk-Knoten (101 bis 105, 150, 301 bis 305, 501 bis 505) nach Anspruch 16, wobei der Knotentyp eine Gewichtung ist, die mit einem Mobile Ad Hoc Netzwerk, MANET -Relais oder ein Verzögerungs- und Unterbrechungs- tolerantes Netzwerk, DTN, -Relais assoziiert ist.

18. Netzwerk-Knoten (101 bis 105, 150, 301 bis 305, 501 bis 505) nach Anspruch 11, wobei der Routing-Tabellen-Generator (154) zum Aktualisieren der aktuellen Netzwerk-Topologie umfasst:

Aktualisieren einer Routing-Tabelle, welche eine Nutzer-Bereich-Routing-Tabelle und ein Kernel-Bereich-Routing-Tabelle umfasst, worin die Nutzer-Bereich-Routing-Tabelle umfasst:

den ersten Pfad; und

eine erste, mit dem ersten Pfad assoziierte Metrik, und

worin die Kernel-Bereich-Routing-Tabelle umfasst

einen Bestimmungs-Netzwerk-Knoten; und eine Netzwerk-Schnittstellen-Anzahl des Bestimmungs-Netzwerk-Knotens.

19. Netzwerk-Knoten (101 bis 105, 150, 301 bis 305, 501 bis 505) nach Anspruch 18, welcher weiter umfasst:
einen Verbindungsfehler-Erfassungs-Schaltkreis (156) zum:

Erfassen eines Fehlers eines anderen Netzwerk-Knoten;
Übertragen einer ersten Fehlermeldung zu anderen benachbarten Knoten; und
Übermitteln einer zweiten Fehlermeldung zu anderen benachbarten Knoten.

20. Netzwerk-Knoten (101 bis 105, 150, 301 bis 305, 501 bis 505) nach Anspruch 19, worin der Verbindungsfehler-Erfassungsschaltkreis (156) weiter ausgestaltet ist zum:

Entfernen des anderen, mit dem Fehler assoziierten Netzwerk-Knotens, von der Nutzer-Bereichs-Routing-Tabelle und der Kernel-Bereich-Routing-Tabelle über den Routing-Tabellen-Generator (154); und
Aktualisieren der Routing-Tabelle.

21. Auf Nähe basiertes Relaisnetzwerk, welches umfasst
einen ersten Netzwerk-Knoten (101 bis 105, 150, 301 bis 305, 501 bis 505) welcher umfasst:

einen Timer, zum Initiieren eines Timers mit einem ersten Timerwert, der eine ganze Zahl ungleich Null ist;
einen Routing-Nachricht-Übermittler (151), zum Übermitteln einer ersten Routing-Nachricht in Antwort auf den Empfang der ersten Routing-Nachricht bevor der Timer abläuft, wobei Übermitteln der ersten Routing-Nachricht umfasst, Anhängen von Information des Netzwerk-Knotens und eines gewählten Pfads, und wobei der Timer nach Übertragen der ersten Routing-Nachricht als ein zweiter Timerwert rückstellt, der um δ kleiner ist als der erste Timerwert, wobei δ eine positive Zahl ungleich Null ist;
einen Routing-Nachrichten-Initiierungs-Schaltkreis (152), zum Initiieren einer zweiten Routing-Nachricht in Antwort auf einen fehlenden Empfang der ersten Routing-Nachricht bevor der Timer abläuft, Rückstellen des Timers auf den ersten Timerwert, und Übertragen der zweiten Routing-Nachricht, wobei die erste Routing-Nachricht und die zweite Routing-Nachricht benachbarten Netzwerk-Knoten, die in dem Bereich des Netzwerk-Knoten direkt zugänglich sind, überflutend geliefert werden;
einen Routing-Tabellen-Generator (154), zum Erzeugen einer aktuellen Netzwerk-Topologie durch die erste Routing-Nachricht und die zweite Routing-Nachricht und Aktualisieren der aktuellen Netzwerk-Topologie;
einen Routing-Metrik Bewertungs-Schaltkreis (153), zum Bewerten eines optimalen Pfads mit einer besten Routing-Metrik in der aktuellen Netzwerk-Topologie, um mindestens ein Datenpaket zu liefern; und
eine erste Drahtlos-Schnittstelle; und
einen zweiten Netzwerk-Knoten (101 bis 105, 150, 301 bis 305, 501 bis 505) welcher umfasst:
eine zweite Drahtlos-Schnittstelle, zum Kommunizieren mit dem ersten Netzwerk-Knoten über die erste Drahtlos-Schnittstelle.

22. Kommunikations-Netzwerk nach Anspruch 21, worin der zweite Netzwerk-Knoten (101 bis 105, 150, 301 bis 305, 501 bis 505) weiter umfasst:
eine dritte Drahtlos-Schnittstelle zur Verbindung mit einem Internet.

23. Kommunikations-Netzwerk nach Anspruch 22, worin der zweite Netzwerk-Knoten (101 bis 105, 150, 301 bis 305, 501 bis 505) weiter umfasst:
eine vierte drahtlos-Schnittstelle zur Bereitstellung eines Wi-Fi-Diensts.

**Revendications**

1. Procédé de distribution de message d'acheminement applicable à un noeud de réseau (101 à 105, 150, 301 à 305, 501 à 505) dans un réseau à relais basé sur la proximité, comprenant :

l'initiation d'un temporisateur ayant une première valeur de temporisateur qui est un nombre positif différent de zéro ;
l'envoi d'un premier message d'acheminement en réaction à la réception du premier message d'acheminement avant que le temporisateur expire, l'envoi du premier message d'acheminement comprenant la jonction d'information du noeud de réseau et d'un parcours sélectionné, et le temporisateur se réinitialisant sous forme d'une deuxième valeur de temporisateur qui est inférieure de δ à la première valeur de temporisateur après transmission du premier message d'acheminement et δ étant un nombre positif différent de zéro ;

l'initiation d'un deuxième message d'acheminement en réaction à la non-réception du premier message d'acheminement avant que le temporisateur expire et la réinitialisation du temporisateur à la première valeur de temporisateur ;

la transmission du deuxième message d'acheminement, le premier message d'acheminement et le deuxième message d'acheminement étant délivrés sous forme de flux dans des noeuds de réseaux adjacents directement accessibles dans la plage du noeud de réseau ;

la structuration d'une topologie de réseau actuel par l'intermédiaire du premier message d'acheminement et du deuxième message d'acheminement ;

l'évaluation d'un parcours optimal présentant la meilleure métrique d'acheminement dans la topologie de réseau actuel pour délivrer au moins un paquet de données ; et

la mise à jour de la topologie de réseau actuel.

**2.** Procédé selon la revendication 1, dans lequel l'envoi du premier message d'acheminement en réaction à la réception du premier message d'acheminement avant que le temporisateur expire comprend en outre :

l'envoi d'un troisième message d'acheminement si le troisième message d'acheminement est reçu avant que la deuxième valeur de temporisateur expire ; et

la réinitialisation du temporisateur à une troisième valeur de temporisateur qui est inférieure à la deuxième valeur de temporisateur.

**3.** Procédé selon la revendication 1, dans lequel l'initiation du deuxième message d'acheminement en réaction à la non-réception du premier message d'acheminement avant que le temporisateur expire comprend en outre :

la réinitialisation du temporisateur sous forme de première valeur de temporisateur après la transmission du deuxième message d'acheminement ; et

la détermination si un quatrième message d'acheminement est reçu avant que la première valeur de temporisateur expire.

**4.** Procédé selon la revendication 1, dans lequel l'envoi du premier message d'acheminement comprend :

la réception du premier message d'acheminement comprenant un premier ensemble de paramètres de noeud de réseau et un premier paramètre de distance ;

la jonction du premier message d'acheminement à un second ensemble de paramètres de noeud de réseau et à un second paramètre de distance ; et

l'envoi du premier message d'acheminement comprenant le premier ensemble de paramètres de noeud de réseau, le second ensemble de paramètres de noeud de réseau, le premier paramètre de distance, et le second paramètre de distance.

**5.** Procédé selon la revendication 4, dans lequel le premier ensemble de paramètres de noeud de réseau et le second ensemble de paramètres de noeud de réseau comprennent :

un nombre d'utilisateurs rattachés ;
une adresse de sous-réseau de point d'accès AP ;
une adresse de satellite de positionnement global GPS ; et
un état de batterie.

**6.** Procédé selon la revendication 1, dans lequel l'évaluation du premier parcours et du second parcours dans la topologie de réseau actuel comprend :

le calcul de métriques d'acheminement multiples en se basant sur un type de noeud de cible, un état de batterie du noeud de cible, une distance entre le noeud de réseau (101 à 105, 150, 301 à 305, 501 à 505) et le noeud de cible, et un nombre d'utilisateurs rattachés ; et

l'évaluation d'un parcours optimal ayant la meilleure métrique d'acheminement pour délivrer au moins un paquet de données.

**7.** Procédé selon la revendication 6, dans lequel le type de noeud est un poids associé à un relais de réseau ad hoc mobile MANET ou à un relais de réseau tolérant le retard et la disruption DTN.

**8.** Procédé selon la revendication 1, dans lequel de la topologie de réseau actuel comprend :

la mise à jour d'un tableau d'acheminement comprenant un tableau d'acheminement d'espace utilisateur et un tableau d'acheminement d'espace noyau,

le tableau d'acheminement d'espace utilisateur comprenant :

le premier parcours ; et
une première métrique associée au premier parcours et le tableau d'acheminement d'espace noyau comprenant :

un noeud de réseau de destination ; et

un numéro d'interface de réseau du noeud de réseau de destination.

9. Procédé selon la revendication 8, comprenant en outre :

la détection d'un échec d'un autre noeud de réseau ;
la transmission d'un premier message d'échec à d'autres noeuds voisins ; et
l'envoi d'un second message d'échec à d'autres noeuds voisins.

10. Procédé selon la revendication 9, comprenant en outre :

le retrait de l'autre noeud de réseau associé à l'échec du tableau d'acheminement d'espace utilisateur et du tableau d'acheminement d'espace noyau ; et
la mise à jour du tableau d'acheminement.

11. Noeud de réseau (101 à 105, 150, 301 à 305, 501 à 505) dans un réseau à relais basé sur la proximité, le noeud de réseau comprenant :

un temporisateur pour initier un temporisateur ayant une première valeur de temporisateur qui est un nombre positif différent de zéro ;
un expéditeur de message d'acheminement (151) pour envoyer un premier message d'acheminement en réaction à la réception du premier message d'acheminement avant que le temporisateur expire, l'envoi du premier message d'acheminement comprenant la jonction d'information du noeud de réseau et d'un parcours sélectionné, et le temporisateur se réinitialisant sous forme d'une deuxième valeur de temporisateur qui est inférieure à la première valeur de temporisateur de $\delta$ après transmission du premier message d'acheminement et $\delta$ étant un nombre positif différent de zéro ;
un circuit d'initiation de message d'acheminement (152) pour initier un deuxième message d'acheminement en réaction à la non-réception du premier message d'acheminement avant que le temporisateur expire, la réinitialisation du temporisateur à la première valeur de temporisateur, et la transmission du deuxième message d'acheminement, le premier message d'acheminement et le deuxième message d'acheminement étant délivrés sous forme de flux dans des noeuds de réseaux adjacents directement accessibles dans la plage du noeud de réseau ;
un générateur de tableau d'acheminement (154) pour structurer une topologie de réseau actuel par l'intermédiaire du premier message d'acheminement et du deuxième message d'acheminement et mettre à jour la topologie de réseau actuel ; et
un circuit d'évaluation de métrique d'acheminement (153) pour évaluer un parcours optimal présentant la meilleure métrique d'acheminement dans la topologie de réseau actuel pour délivrer au moins un paquet de données.

12. Noeud de réseau (101 à 105, 150, 301 à 305, 501 à 505) selon la revendication 11, dans lequel l'expéditeur de message d'acheminement (151) est en outre conçu pour :

envoyer un troisième message d'acheminement si le troisième message d'acheminement est reçu avant que la deuxième valeur de temporisateur expire ; et
réinitialiser le temporisateur à une troisième valeur de temporisateur qui est inférieure à la deuxième valeur de temporisateur.

13. Noeud de réseau (101 à 105, 150, 301 à 305, 501 à 505) selon la revendication 11, dans lequel le circuit d'initiation de message d'acheminement (152) est en outre conçu pour :

réinitialiser le temporisateur sous forme de première valeur de temporisateur après transmission du deuxième message d'acheminement ; et
déterminer si un quatrième message d'acheminement est reçu avant que la première valeur de temporisateur expire.

14. Noeud de réseau (101 à 105, 150, 301 à 305, 501 à 505) selon la revendication 11, comprenant en outre un transmetteur et un récepteur, et l'expéditeur de message d'acheminement (151) envoyant le premier message d'acheminement comprenant :

la réception via le récepteur du premier message d'acheminement comprenant un premier ensemble de paramètres de noeud de réseau et un premier paramètre de distance ;
la jonction du premier message d'acheminement à un second ensemble de paramètres de noeud de réseau et un second paramètre de distance ; et
l'envoi via le transmetteur du premier message d'acheminement comprenant le premier ensemble de paramètres de noeud de réseau, le second ensemble de paramètres de noeud de réseau, le premier paramètre de distance, et le second paramètre de distance.

15. Noeud de réseau (101 à 105, 150, 301 à 305, 501 à 505) selon la revendication 14, dans lequel le premier ensemble de paramètres de noeud de réseau et le second ensemble de paramètres de noeud de réseau comprennent :

> un nombre d'utilisateurs rattachés ;
> une adresse de sous-réseau de point d'accès AP ;
> une adresse de satellite de positionnement global GPS ; et
> un état de batterie.

16. Noeud de réseau (101 à 105, 150, 301 à 305, 501 à 505) selon la revendication 11, comprenant en outre un transmetteur et le circuit d'évaluation de métrique d'acheminement (153) pour évaluer le premier parcours et le second parcours dans la topologie de réseau actuel comprenant :

> le calcul de métriques d'acheminement multiples en se basant sur un type de noeud de cible, un état de batterie du noeud de cible, une distance entre le noeud de réseau (101 à 105, 150, 301 à 305, 501 à 505) et le noeud de cible, et un nombre d'utilisateurs rattachés ; et
> l'envoi via le transmetteur d'au moins un paquet de données via un parcours optimal ayant la meilleure métrique d'acheminement.

17. Noeud de réseau (101 à 105, 150, 301 à 305, 501 à 505) selon la revendication 16, dans lequel le type de noeud est un poids associé à un relais de réseau ad hoc mobile MANET ou à un relais de réseau tolérant le retard et la disruption DTN.

18. Noeud de réseau (101 à 105, 150, 301 à 305, 501 à 505) selon la revendication 11, dans lequel le générateur de tableau d'acheminement (154) pour la mise à jour de la topologie de réseau actuel comprend :

> la mise à jour d'un tableau d'acheminement comprenant un tableau d'acheminement d'espace utilisateur et un tableau d'acheminement d'espace noyau,
> le tableau d'acheminement d'espace utilisateur comprenant :
>
> > le premier parcours ; et
> > une première métrique associée au premier parcours et le tableau d'acheminement d'espace noyau comprenant :
> >
> > > un noeud de réseau de destination ; et
> > > un numéro d'interface de réseau du noeud de réseau de destination.

19. Noeud de réseau (101 à 105, 150, 301 à 305, 501 à 505) selon la revendication 18, comprenant en outre :

> un circuit de détection d'échec de lien (156) pour :
>
> > détecter un échec d'un autre noeud de réseau ;
> > transmettre un premier message d'échec à d'autre noeuds voisins ; et
> > envoyer un second message d'échec à d'autre noeuds voisins,

20. Noeud de réseau (101 à 105, 150, 301 à 305, 501 à 505) selon la revendication 19, dans lequel le circuit de détection d'échec de lien (156) est en outre conçu pour :

> retirer l'autre noeud de réseau associé à l'échec du tableau d'acheminement d'espace utilisateur et du
> tableau d'acheminement d'espace noyau via le générateur de tableau d'acheminement (154) ; et mettre à jour le tableau d'acheminement.

21. Réseau à relais basé sur la proximité, comprenant un premier noeud de réseau (101 à 105, 150, 301 à 305, 501 à 505) comprenant :

> un temporisateur pour initier un temporisateur ayant une première valeur de temporisateur qui est un nombre positif différent de zéro ;
> un expéditeur de message d'acheminement (151) pour envoyer un premier message d'acheminement en réaction à la réception du premier message d'acheminement avant que le temporisateur expire, l'envoi du premier message d'acheminement comprenant la jonction d'information du noeud de réseau et d'un parcours sélectionné, et le temporisateur se réinitialisant sous forme d'une deuxième valeur de temporisateur qui est inférieure à la première valeur de temporisateur de $\delta$ après transmission du premier message d'acheminement et $\delta$ étant un nombre positif différent de zéro ;
> un circuit d'initiation de message d'acheminement (152) pour initier un deuxième message d'acheminement en réaction à la non-réception du premier message d'acheminement avant que le temporisateur expire, la réinitialisation du temporisateur à la première valeur de temporisateur, et la transmission du deuxième message d'acheminement, le premier message d'acheminement et le deuxième message d'acheminement étant délivrés sous forme de flux dans des noeuds de réseaux adjacents directement accessibles dans la plage du noeud de réseau ;
> un générateur de tableau d'acheminement (154) pour structurer une topologie de réseau actuel par l'intermédiaire du premier message d'acheminement et du deuxième message d'acheminement et mettre à jour la topologie de réseau actuel ; et

un circuit d'évaluation de métrique d'acheminement (153) pour évaluer un parcours optimal présentant la meilleure métrique d'acheminement dans la topologie de réseau actuel pour délivrer au moins un paquet de données ; et une première interface sans fil ; et un second noeud de réseau (101 à 105, 150, 301 à 305, 501 à 505) comprenant : une deuxième interface sans fil pour communiquer avec le premier noeud de réseau via la première interface sans fil.

22. Réseau de communication selon la revendication 21, dans lequel le second noeud de réseau (101 à 105, 150, 301 à 305, 501 à 505) comprend en outre : une troisième interface sans fil pour connexion à Internet.

23. Réseau de communication selon la revendication 22, dans lequel le second noeud de réseau (101 à 105, 150, 301 à 305, 501 à 505) comprend en outre : une quatrième interface sans fil pour fournir un service wifi.

FIG. 1A

```
┌──────────────────┐
│ Assume network   │  ⌇─ S111
│ Topology         │
└──────────────────┘
         │
         ▼
┌──────────────────┐
│ Determine        │  ⌇─ S112
│ initiative source│
└──────────────────┘
         │
         ▼
┌──────────────────┐
│ Forward routing  │  ⌇─ S113
│ message          │
└──────────────────┘
         │
         ▼
┌──────────────────┐
│ Evalute routing  │  ⌇─ S114
│ metrics          │
└──────────────────┘
         │
         ▼
┌──────────────────┐
│ Maintain routing │  ⌇─ S115
│ table            │
└──────────────────┘
         │
         ▼
┌──────────────────┐
│ Link failure     │  ⌇─ S116
│ recovery         │
└──────────────────┘
```

FIG. 1B

FIG. 1C

102
Routing Table b
[0]

link failure message

103
Routing Table c
[0]

link failure message

link failure message
routing message

b [1] [2]

D_bc [1] c [2]

routing message

Na

101

D_ab

cD

104

Nd

[1]
[0] a [2]

MANET+WLAN+D2D

[1] d [0]
[2]

Routing Table a

routing message
link failure message

D_ae

D_ed

Routing Table d

User space routing Table
↓
kernel space routing Table

105

[1] [2]
e
[0]

Routing Table e

link failure message

routing message

FIG. 1D

start

set timer
T:To — S201

Initiate Routing
message — S203

S202

Receive routing
message before
timer expires?

N

Y

Forward routing
message

S204

Reset timer as
T:max(T−δ,Tmin)

S205

FIG. 2A

I — Initiate Routing Message

F — Forward Routing Message

T — Timer Expires

FIG. 2B

FIG. 3A

User Space 351

| Path | Metric |
|---|---|
| $(U_a, N_a, LOC_a, Bat_a) \langle D_{ab} \rangle$<br>$(U_b, N_b, LOC_b, Bat_b) \langle D_{bc} \rangle$<br>$(U_c, N_c, LOC_c, Bat_c) \langle D_{cd} \rangle$ | Ma,1 |
| $(U_a, N_a, LOC_a) \langle D_{ae} \rangle$<br>$(U_e, N_e, LOC_e \langle D_{ed} \rangle$ | Ma,2 |

352

Kernel Space

| Dest | IF |
|---|---|
| $N_a$ | 2 |

User Space 353

| Path | Metric |
|---|---|
| $(U_a, N_a, LOC_b, Bat_b) \langle D_{bc} \rangle$<br>$(U_c, N_c, LOC_c, Bat_c) \langle D_{cd} \rangle$ | Mb,1 |
| $(U_c, N_c, LOC_c, Bat_c) \langle D_{cd} \rangle$ | Mc,1 |
| $(U_e, N_e, LOC_e, Bat_e) \langle D_{ed} \rangle$ | Me,2 |

354

Kernel Space

| Dest | IF |
|---|---|
| $N_b$ | 1 |
| $N_c$ | 1 |
| $N_e$ | 2 |

FIG. 3B

```
┌─────────────────────┐
│ When link failure   │ ⌐ S401
│ occurs due to relay │
│ damage/outage       │
└─────────────────────┘
        │
        ▼
┌─────────────────────┐            ┌──────────────────────┐
│ Detecting relays    │ ⌐ S402     │ Relay receiving link │ ⌐ S403
│ send link failure   │            │ failure message      │
│ message to neighbors│            │ forward it to other  │
│                     │            │ neighbors            │
└─────────────────────┘            └──────────────────────┘
        │
        ▼
┌──────────────────────────────────────────────────────┐
│ Routes in user space through the failed links (and    │ ⌐ S404
│ their metrics) are removed immediately                 │
└──────────────────────────────────────────────────────┘
        │
        ▼
┌──────────────────────────────────────────────────────┐
│ Routing table in kernel space is updated according to │ ⌐ S405
│ user space route changes                               │
└──────────────────────────────────────────────────────┘
```

FIG. 4

User Space

| Path | Metic |
|---|---|
| $(N_a,LOC_a,Bat_a)<D_{ab}>(N_b,LOC_b,Bat_b)<D_{bc}>(N_c,LOC_c,Bat_c)<D_{cd}>$ | $M_a,1$ |
| $(N_b,LOC_b,Bat_b)<D_{bc}>(N_c,LOC_c,Bat_c)<D_{cd}>$ | $M_b,1$ |
| $(N_c,LOC_c,Bat_c)<D_{cd}>$ | $M_c,1$ |
| $(N_a,LOC_a,Bat_a)<D_{ab}>(N_e,LOC_e,Bat_e)<D_{ed}>$ | $M_a,2$ |
| $(N_e,LOC_e,Bat_e)<D_{ed}>$ | $M_c,1$ |

Kernel Space

| Dest | IF |
|---|---|
| $N_a$ | 2 1 |
| $N_b$ | 1 |
| $N_c$ | 1 |
| $N_e$ | 2 |

FIG. 5

```
┌─────────────────────────────────────────────────────────┐
│ initiate a timer having a first timer value that is a    │
│ non-zero positive number                                  │──── S601
└─────────────────────────────────────────────────────────┘
                            │
                            ▼
┌─────────────────────────────────────────────────────────┐
│ forward a first routing message via a first path in      │
│ response to the first routing message being received      │──── S602
│ before the timer expires                                  │
└─────────────────────────────────────────────────────────┘
                            │
                            ▼
┌─────────────────────────────────────────────────────────┐
│ initiate a second routing message via a second path in   │
│ response to not receiving the first routing message       │──── S603
│ before the timer expires                                  │
└─────────────────────────────────────────────────────────┘
                            │
                            ▼
┌─────────────────────────────────────────────────────────┐
│ construct a current network topology                      │──── S604
└─────────────────────────────────────────────────────────┘
                            │
                            ▼
┌─────────────────────────────────────────────────────────┐
│ evaluate the first path and the second path within the   │
│ current network topology to deliver a data packet via     │──── S605
│ the first path or the second path                         │
└─────────────────────────────────────────────────────────┘
                            │
                            ▼
┌─────────────────────────────────────────────────────────┐
│ maintain the current network topology by updating the    │
│ latest changes to the current network topology            │──── S606
└─────────────────────────────────────────────────────────┘
```

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8149715 B1